# FASCICULE DE BREVET EUROPEEN

(11) **EP 0 806 446 B1**
(45) Date de publication et mention de la délivrance du brevet: **24.10.2001**
(21) Numéro de dépôt: 97400965.6
(22) Date de dépôt: 29.04.1997
(51) Int. Cl.: C08G 59/50, C08J 3/20

(54) **Compositions de résines époxydes thermodurcissables à latence améliorée**
Wärmehärtbare Epoxidharzmischungen mit verbesserter Latenz
Thermosetting epoxy resin compositions having improved latency

(30) Priorité: 09.05.1996 FR 9605885
(43) Date de publication de la demande: 12.11.1997
(73) Titulaire: INSTITUT FRANCAIS DU PETROLE, 92852 Rueil-Malmaison Cedex (FR)
(72) Inventeur: Mariaggi, Paul, 38200 Seyssuel (FR); Jacquemin-Hauviller, Frédérique, 69230 Saint Genis Laval (FR); Delhomme, Henri, 69110 Sainte Foy Les Lyons (FR); Audigier, Dominique, 69530 Brignais (FR)

(56) Documents cités:
- EP-A- 0 018 950
- EP-A- 0 170 075
- WO-A-94/25655
- WO-A-97/11112
- DE-A- 1 668 986
- FR-A- 2 734 832
- US-A- 4 003 876

## Description

La présente invention concerne des compositions thermodurcissables à latence améliorée, obtenues à partir d'une suspension de fines particules d'au moins une polyamine aromatique comportant au moins un substituant sur le noyau aromatique en alpha de chacune des fonctions amines. Ces polyamines sont les agents principaux de réticulation (durcisseurs) des résines époxy.

Les polyamines aromatiques que l'on envisage d'employer dans le cadre de la présente invention sont la 4,4'-méthylène-bis-(2,6-diéthylaniline), en abrégé ci-après M-DEA, et la 4,4'-méthylène-bis-(2,6-diméthylaniline), en abrégé ci-après M-DMA.

On connaît dans l'industrie des procédés d'utilisation des polyamines aromatiques et en particulier de la M-DEA et de la M-DMA comme durcisseurs de certaines résine époxy telles que par exemple les diverses sortes d'ARALDITES®, les résines EPIKOTES®, les résines dénommées EPON®, la résine obtenue à partir du diglycidyléther du bis-phénol-F, en abrégé ci-après DGEBF, et en particulier de la résine obtenue à partir du diglycidyléther du bis-phénol-A, en abrégé ci-après DGEBA. Dans ces procédés, il est expressément recommandé de dissoudre préalablement la M-DEA ou la M-DMA dans la résine DGEBA avant imprégnation sur fibre de renfort, par exemple sur fibre de verre, sur fibre de carbone, sur fibre céramique ou sur fibre naturelle ou synthétique. Cette mise en solution homogène de la polyamine dans la résine époxy se pratique habituellement selon deux techniques principales décrites pour mémoire ci-après.

Selon une première méthode, telle que décrite dans le document DE-A-1 668 986, on effectue la dissolution de la polyamine aromatique dans la résine époxy préchauffée à une température supérieure au point de fusion de la polyamine employée, ou supérieure au point de fusion de la polyamine employée ayant le point de fusion le plus élevé lorsque l'on emploie un mélange de polyamines. Cette dissolution dure généralement au moins 15 minutes et très souvent de 15 à 30 minutes. Durant cette phase, il est impératif de maintenir la température au moins au niveau de la température de fusion de la polyamine employée ayant le point de fusion le plus élevé de manière à obtenir une solution homogène. Si nécessaire, la durée de cette dissolution sera augmentée jusqu'à l'obtention d'une solution homogène. Malgré un refroidissement rapide, le fait que la polyamine soit passée en solution à chaud, c'est-à-dire à une température au moins égale à sa température de fusion, entraîne un début de réaction (polyaddition), ce qui implique ensuite la nécessité pour l'utilisateur de stocker la résine ou le préimprégné à basse température, c'est-à-dire à une température suffisamment basse pour que la réaction de polyaddition soit fortement limitée et que l'on arrive ainsi à obtenir une durée d'utilisation de plusieurs dizaines de jours, voire de plusieurs mois. On considère ainsi dans ce domaine que sans stockage à froid, c'est-à-dire à moins 18°C au minimum, la durée d'utilisation du mélange homogène obtenu n'est que de quelques heures, ce qui, dans les utilisations envisagées de ces compositions, est notablement insuffisant.

La deuxième méthode préconisée, telle que décrite dans le document EP-A-0 170 075, consiste à obtenir la solubilisation de la polyamine ou du mélange de polyamines à basse température dans un solvant adéquat ayant un point d'ébullition relativement bas, c'est-à-dire par exemple inférieur à environ 100°C. Ce solvant est par exemple un solvant cétonique tel que la méthyl-éthyl-cétone, en abrégé ci-après MEC. Cette solution de polyamine est ensuite ajoutée à la résine époxy. Cette méthode de mélange, qui évite un passage à température élevée, nécessite néanmoins l'élimination ultérieure du solvant.

Or l'élimination du solvant pose ici un problème particulier lié à la polarité particulière du mélange polyamine-résine époxy et impose, en particulier lors de l'utilisation de la MEC comme solvant, un séchage par chauffage à une température supérieure à 100°C pendant quelques minutes. Malgré ces précautions, il reste environ 0,8% en poids de solvant dans le préimprégné. Cette quantité résiduelle de solvant limite l'utilisation de ce procédé à des stratifiés de faible épaisseur, car l'ébullition du solvant au moment du pressage en température (habituellement la température de pressage est supérieure à environ 120°C) engendre une porosité non souhaitée et qui peut être gênante dans le cadre de l'utilisation envisagée de ce préimprégné. L'emploi de tels préimprégnés pour les composites de fortes épaisseurs (ayant par exemple une épaisseur supérieure à 1 millimètre et le plus souvent inférieure à 10 centimètres et généralement d'environ 5 millimètres à environ 5 centimètres) ne peut être envisagé que si l'on utilise le système de poche sous vide couplé à un autoclave sous pression, ce qui complique sérieusement la mise en oeuvre de cette méthode. Par ailleurs, on a remarqué que la durée de vie d'un tel préimprégné est le plus souvent de l'ordre de quelques jours et inférieure à une semaine à la température ambiante et n'est plus que de quelques heures, généralement moins de 5 heures à 80°C, ce qui est notablement insuffisant dans les utilisations envisagées.

Il est clair que ces procédés ne peuvent pas être appliqués dans les cas où le séchage se fait dans des conditions douces, c'est-à-dire à température modérée, par exemple inférieure à environ 100°C.

Une troisième méthode consiste à broyer de manière mécanique la polyamine ou le mélange de polyamines en de très fines particules, habituellement inférieures à environ 50 microns (1 micron = 10⁻⁶ mètre) et de les introduire dans la résine époxy, ou encore de broyer ensemble la résine époxy et la polyamine ou le mélange de polyamines dans des dispositifs de type tri-cylindres etc.. Ces méthodes mécaniques ne permettent pas d'obtenir de manière simple et en toute sécurité des mélanges homogènes.

Un broyage préalable de la polyamine ou du mélange de polyamines sous forme de poudre très fine nécessite la mise en place d'une protection matérielle rigoureuse contre les poussières micronisées d'amines aromatiques, car ces produits sont relativement toxiques et l'utilisateur doit impérativement être protégé et éviter au maximum tout contact et toute inhalation de ces poussières.

Un broyage du mélange polyamine-résine époxy nécessite une mise en oeuvre comportant au minimum trois étapes successives :
a) mélange du durcisseur de type polyamine ou mélange de polyamines avec la résine époxy, ce qui nécessite habituellement un chauffage suffisant pour faire chuter la viscosité dynamique du milieu pour être à même de réaliser ce mélange de façon aussi homogène que possible ;
b) passage du mélange obtenu à l'étape (a) dans un dispositif de broyage par exemple de type tri-cylindre. On observe alors au cours de cette étape de broyage qu'il se forme une ségrégation entre les particules de polyamine et les particules de résine époxy sur les rouleaux. Ce phénomène est limité lorsque l'on effectue plusieurs passages du mélange polyamine-résine époxy dans le système de broyage ;
c) enfin, le produit obtenu à l'étape (b), qui est habituellement insuffisamment homogène, est envoyé dans un dispositif adapté pour produire un mélange homogène. Ce dispositif sera par exemple un réacteur à ancre. Cette méthode conduit habituellement à de fortes pertes de produit et implique de très nombreuses manipulations.

Le temps nécessaire, même à température modérée, pour produire cette suspension de polyamine dans la résine époxy de façon mécanique est suffisamment long pour influencer notablement et de façon défavorable la durée de latence qui devient largement inférieure à la durée souhaitable pour l'utilisation envisagée.

Le document WO-A-97/11112, publié le 27 mars 1997, décrit des compositions obtenues par mélange d'un durcisseur constitué d'une diamine dérivée d'un fluorène avec une résine époxy en phase liquide.

Dans ce document, la diamine est utilisée en poudre et se retrouve dans le polyépoxyde en partie sous forme dissoute, et en partie sous forme de poudre. Dans les exemples comparatifs 2 et 3, toute la diamine se retrouve à l'état dissous dans le polyépoxyde. Dans ce document, la recristallisation de la diamine dissoute n'est pas décrite et, au surplus, les diamines considérées appartiennent à une famille particulière, celle des diamines dérivées du fluorène.

Ces méthodes bien connues de l'homme du métier sont donc non applicables pour obtenir un prépolymère qui doit répondre aux conditions de mise en oeuvre suivantes :
- être capable de procurer une durée de vie en pot (stockage) ou sur fibres de renfort, par exemple fibre de verre ou équivalent, égale ou supérieure à 20 jours, habituellement d'environ 30 jours à environ 4 mois, et le plus souvent d'environ 30 jours à environ 2 mois, et ceci pour une température moyenne de stockage égale ou inférieure à 25°C, habituellement d'environ 0°C à environ 15°C, et le plus souvent d'environ 0°C à environ 5°C ;
- être capable de procurer après stockage en pot ou sur support dans les conditions décrites plus haut une latence résiduelle d'au moins 6 heures et de préférence d'au moins 8 heures, à une température d'environ 70°C à environ 90°C et le plus souvent d'environ 80°C ;
- être capable de procurer après stockage en pot ou sur support pendant une durée d'au moins 90 jours, habituellement d'environ 90 jours à environ 6 mois, et le plus souvent d'environ 90 jours à environ 4 mois, à une température inférieure ou égale moins 18°C, habituellement d'environ -30°C à environ -18°C, et le plus souvent d'environ -25°C à environ -18°C, une latence résiduelle d'au moins 8 heures, de préférence d'au moins 10 heures, et le plus souvent d'au moins 11 heures, à une température d'environ 70°C à environ 90°C et le plus souvent d'environ 80°C ;
- pouvoir être déposé sur support fibreux tel que par exemple sur fibre de verre, sur fibre de carbone, sur fibre en KEVLAR®, sur fibre ou fil métallique, sur fibre céramique ou sur fibre naturelle ou synthétique, de manière classique, que ce soit manuellement ou mécaniquement ; et
- enfin, respecter les règles d'hygiène et de sécurité.

La présente invention concerne une composition réactive à latence améliorée contenant au moins une polyamine aromatique primaire choisie dans le groupe formé par la 4,4'-méthylène-bis-(2,6-diéthylaniline) et la 4,4'-méthylène-bis-(2,6-diméthylaniline), ladite polyamine étant sous forme de particules cristallisées de taille inférieure à 100 microns en suspension dans une résine époxy, ladite composition étant caractérisée en ce qu'elle est obtenue par addition d'au moins une polyamine aromatique primaire sous forme liquide dans la résine époxy maintenue à une température de 40 à 60°C, de manière à permettre, par refroidissement de la solution obtenue, la cristallisation de ladite polyamine dans la résine époxy sous forme de particules de taille inférieure à 100 microns.

Les compositions thermodurcissables obtenues selon la présente invention comprennent une suspension de fines particules solides d'une ou plusieurs polyamines primaires aromatiques ayant au moins un substituant sur le noyau aromatique en alpha de chacune des fonctions amines.

La présente invention concerne également l'utilisation de ces compositions dans la fabrication de préimprégnés devant présenter une forte latence et ceci dans des procédés exigeant des étapes intermédiaires à 80°C de plusieurs heures.

Elle concerne également des procédés de fabrication de produits nécessitant la polymérisation de la composition à une température limitée à 140°C et devant présenter une bonne résistance à l'hydrolyse à 80°C et au dessus de cette température.

Le choix des polyamines aromatiques que l'on emploie dans le cadre de la présente invention est en particulier guidé par le fait que l'on souhaite avoir des polyamines aromatiques de faible réactivité et de faible solubilité à des températures inférieures à environ 40°C dans les résines époxy employées. Le choix est également influencé par le fait que ces polyamines aromatiques doivent de préférence procurer une bonne tenue à l'hydrolyse par les enchaînements amines secondaires et tertiaires qu'elles génèrent par réaction sur le cycle oxiranne. Elle doivent également procurer de bonnes propriétés de résistance en température.

La composition de la présente invention résulte d'un mode opératoire qui permet la mise en suspension de la polyamine dans des conditions telles que l'on n'amorce pas ou peu la réaction entre les deux constituants de la formulation au cours de ce processus de mise en suspension. On a observé, lors de la mise en oeuvre de ce processus de mise en suspension par recristallisation, qu'il se forme des particules dont la taille est dans la gamme de tailles indiquée plus haut et le plus souvent inférieure à environ 60 microns et ce, à partir de polyamines commercialisées pour des raisons d'hygiène et de sécurité sous forme de poudre de granulométrie habituellement supérieure à 200 microns ou sous forme d'écailles de tailles importantes ayant le plus souvent une surface de plusieurs millimètres carrés et une épaisseur d'environ 0,2 à 0,5 millimètre.

Dans tous les cas, l'utilisation d'agents mouillants favorisant le mouillage entre les particules de polyamine et la résine époxy ou la résine sur fibre-support peut être envisagée.

La composition selon la présente invention peut comporter une proportion de polyamine aromatique primaire en poids d'environ 20 à environ 50 parties pour 100 parties de résine époxy et le plus souvent d'environ 25 à environ 45 parties pour 100 parties de résine époxy.

La viscosité dynamique de la résine époxy employée est ajustée à une valeur d'environ 0,04 à environ 50 Pa.s à environ 25°C, éventuellement par l'ajout d'un solvant ou de diluants réactifs appropriés.

Pour que la composition puisse avoir la stabilité ou latence désirée, elle pourra contenir par exemple au plus 30% en poids de ces polyamines aromatiques solubilisées dans la résine époxy tant que la température de ladite composition ne dépasse pas 60°C et de préférence 40°C.

La résine époxy peut être choisie dans le groupe formé par les résines commerciales citées plus haut, la résine diglycidyléther du bis-phénol-A ou du bis-phénol-F, la résine de bis-phénol formol, la résine phénol-novolaque, les résines cycloaliphatiques, les résines tri- ou tétra-fonctionnelles ou les mélanges d'au moins deux de ces résines.

La présente invention concerne aussi l'utilisation de la composition réactive à latence améliorée pour l'imprégnation d'une structure de mèches tressées.

La structure imprégnée peut être introduite dans un puits foré dans le sol, la réaction de polymérisation de ladite composition conduisant au durcissement de celle-ci in situ dans le puits.

La structure peut avoir une forme tubulaire, par exemple comme les préformes décrites dans les documents de brevets WO-A-9425655 et WO-A-9421887.

La présente invention sera mieux comprise et ses avantages apparaîtront plus clairement à la lecture des essais décrits ci-après.

Ces essais sont réalisés avec la résine époxy DGEBA fabriquée et vendue par la société CIBA sous la référence LY 556® Les principales caractéristiques de la résine sont :
- Viscosité dynamique à 25°C : 12 Pa.s
- Teneur en époxyde : 1,15 équivalent par kilogramme
- Masse volumique : 1,15 g/cm³.

La composition suivant la présente invention est obtenue comme décrit ci-après.

On porte 4,64 kilogrammes de M-DEA, dont le point de fusion est de 88°C, à la température de 90°C et on introduit ce liquide dans 16 kilogrammes de DGEBA liquide contenu dans un réacteur comportant des moyens de régulation de température permettant de maintenir la température du mélange en formation entre environ 40°C et environ 60°C durant tout le temps de l'addition de la M-DEA dans la DGEBA. Lorsque l'addition est terminée, on refroidit le mélange jusqu'à la température ambiante. On constate d'une part qu'il y a eu formation de très fines particules de M-DEA que l'on voit en suspension dans la DGBEA. Une récupération de ce produit en suspension par filtration montre que le rendement de recristallisation est de 73% en poids et la partie solubilisée de cette amine n'excède pas 27% en poids. La taille des grains de polyamine formés lors de cette recristallisation, observée à l'aide d'un microscope, montre que la majorité d'entre eux se situe aux environs de 30 à 40 microns et que la quasi totalité de ces grains a une taille comprise entre 10 et 50 microns.

Une composition comprenant de la M-DMA réalisée de la même manière que ci-dessus en ajoutant la M-DMA dont le point de fusion est de 117°C et que l'on à portée à 120°C à la DGEBA dans les mêmes proportions et dans les mêmes conditions que celle décrites lors de l'utilisation de la M-DEA (voir plus haut) conduit au même taux de recristallisation et à la même taille de particules.

Dans les deux cas, on a vérifié que les mélanges pâteux DGBEA-polyamine effectués selon la procédure de la présente invention avaient une durée de vie en pot et/ou une stabilité après imprégnation sur tissus de verre égale ou supérieure à 5 jours à la température moyenne de 22°C. On a également vérifié que la stabilité ou latence résiduelle après stockage pendant 30 jours à 4°C ou après stockage pendant 90 jours à -18°C, les mélanges étant seuls ou sur support imprégné, peut être maintenue pendant 12 heures minimum lors d'une exposition à une utilisation à une température d'environ 80°C. On n'a pas constaté de décantation de particules solides de polyamine en fonction du temps.

L'imprégnation manuelle sur tissus de verre à une température moyenne de 40°C est possible et donne des supports enduits de bonne qualité, au moins comparable aux produits conventionnels.

L'imprégnation mécanique à l'aide d'une machine pourvue d'un racle ou d'un rouleau doseur est également possible à une température de mélange d'environ 40°C.

L'imprégnation par trempage suivi d'un essorage selon des techniques conventionnelles est possible à 40°C.

On a donc vérifié que la mise en oeuvre de la composition selon l'invention ne pose aucun problème spécifique par rapport aux techniques d'utilisation connues, bien entendu à condition de respecter la valeur de température maximale d'environ 40°C.

Il est donc clair que des préformes, par exemple en tissus de verre, en carbone ou en polyaramide, ou même métalliques, par exemple les produits décrits dans les documents WO 9425655 et WO 9421887, peuvent être imprégnées avec les compositions obtenues selon la présente invention, pour être ensuite stockées pendant au moins 30 jours à température inférieure ou égale à 5°C, et 90 jours à température inférieure ou égale à -18°C, en attente de la mise en place dans un puits où la polymérisation finale sera effectuée par un apport thermique déterminé.

Les propriétés physiques des matériaux obtenus à partir des mélanges pâteux de DGBEA et de l'amine choisie sont testées pour les résines cuites à partir de ces mélanges après une cuisson de 8 heures à 140°C ou après une cuisson de 2 heures à 200°C. La transition vitreuse du mélange pâteux est, dans le cas d'une cuisson à 140°C, de 157°C et elle est de 170°C pour une cuisson à 200°C. Cette transition vitreuse correspond aux valeurs connues pour des mélanges classiques des deux constituants cuits dans les mêmes conditions. Cela confirme que les produits obtenus selon la présente invention sont des produits comparables à ceux obtenus de façon conventionnelles, en particulier avec une dissolution préalable de la polyamine dans la DGBEA à chaud, présentant une très faible latence du mélange.

Avec la composition obtenue comme décrit plus haut et comprenant la M-DEA comme polyamine, on a fabriqué un stratifié de 3,2 millimètre d'épaisseur (20 plis), ayant une teneur en résine de 37% en poids. On a vérifié que les propriétés mécaniques et physiques du stratifié obtenu sont identiques à celles de stratifiés composés de plis préimprégnés par voie "solvant" ou celles de stratifiés obtenus par la méthode de mélange préalable de polyamine avec la résine époxy et solubilisation par fusion.

On a contrôlé l'aspect du composite après recuit. L'observation au microscope ne fait pas apparaître d'hétérogénéité qui serait due à une agglomération ou à une concentration de la polyamine pas ou mal fondue dans la résine.

L'aspect du composite est identique à un stratifié obtenu de manière classique.

Dans le but de mieux montrer l'avantage apporté par la mise en oeuvre du procédé de fabrication d'une composition selon la présente invention, on a fabriqué divers échantillons de composition en suivant les méthodes classiques, selon l'art antérieur, de préparation de ces compositions, en utilisant les mêmes proportions des mêmes constituants, c'est-à-dire la DGEBA et la M-DEA. Le test de comparaison choisi est la mesure du temps de gel à 80°C. Le temps de gel est le temps requis pour une température choisie et une composition donnée, pour atteindre un taux d'avancement de la réaction de polymérisation X_{g}. Ce taux d'avancement X_{g} de la réaction au point de gel est un facteur important, car il est lié à un changement majeur rhéologique dû à la transformation irréversible d'un liquide visqueux en un gel viscoélastique. Le temps de gel est mesuré avec un appareil, commercialisé sous le nom TROMBOMAT® par la société PRODEMAT, qui est capable de déterminer le passage au point de gel et d'évaluer la réactivité du durcisseur à partir du suivi cinétique de la réaction.

La composition N° 1 est obtenue par la méthode mécanique utilisant un tri-cylindre comme décrit plus haut avec une température maximum de 40°C. La composition N°2 est obtenue par fusion d'un mélange de la poudre de polyamine et de la DGBEA à 100°C pendant 30 minutes, puis refroidissement progressif d'une durée. d'une heure jusqu'à la température de 22°C. La composition N°3 est obtenue par mélange des constituants dans la méthyl-éthyl-cétone, puis évaporation du solvant comme décrit plus haut. La composition N°4 est celle obtenue selon la présente invention comme décrit plus haut. Le tableau 1 ci-après donne les temps de gel à 80°C. On constate un temps de gel notablement plus important pour la composition obtenue par la méthode selon l'invention. On remarque également que seul le temps de gel de la composition N°1 est relativement raisonnable, celui des autres compositions N°2 et N°3 étant notablement insuffisant pour l'utilisation envisagée.

**TABLEAU 1**

| Temps de gel en heures et minutes | | | |
|---|---|---|---|
| Composition N°1 | Composition N°2 | Composition N°3 | Composition N°4 |
| 11 h. 45 min | 6 h. 00 | 10 h. 00 | 12 h. 35 min |

## Revendications

1. Composition réactive à latence améliorée contenant au moins une polyamine aromatique primaire choisie dans le groupe formé par la 4,4'-méthylène-bis-(2,6-diéthylaniline) et la 4,4'-méthylène-bis-(2,6-diméthylaniline), ladite polyamine étant sous forme de particules cristallisées de taille inférieure à 100 microns en suspension dans une résine époxy, ladite composition étant **caractérisée en ce qu'**elle est obtenue par addition d'au moins une polyamine aromatique primaire sous forme liquide dans la résine époxy maintenue à une température de 40 à 60°C, de manière à permettre, par refroidissement de la solution obtenue, la cristallisation de ladite polyamine dans la résine époxy sous forme de particules de taille inférieure à 100 microns.

2. Composition selon la revendication 1 dans laquelle la taille des particules cristallisées de polyamine est inférieure à 60 microns.

3. Composition selon la revendication 1 ou 2 dans laquelle la proportion de la polyamine aromatique primaire est de 20 à 50 parties en poids pour 100 parties de résine époxy.

4. Composition selon l'une des revendications 1 à 3 dans laquelle la viscosité dynamique de la résine époxy employée est ajustée à une valeur de 0,04 à 50 Pa.s à 25°C, éventuellement par l'ajout d'un solvant ou de diluants réactifs.

5. Composition selon l'une des revendications 1 à 4 dans laquelle la résine époxy est choisie dans le groupe formé par la résine diglycidyléther du bis-phénol-A ou du bis-phénol-F, la résine de bis-phénol formol, la résine phénol-novolaque, les résines cycloaliphatiques, les résines tri- ou tétrafonctionnelles ou les mélanges d'au moins deux de ces résines.

6. Composition selon l'une des revendications 1 à 5 ayant un temps de gel à 80°C d'au moins 12 heures.

7. Procédé de fabrication d'une composition réactive à latence améliorée selon l'une des revendications 1 à 6 **caractérisé en ce qu'**il comprend l'addition d'au moins une polyamine aromatique telle que définie dans la revendication 1 ou 2, sous forme liquide dans une résine époxy maintenue à une température de 40 à 60°C, de manière à permettre, par refroidissement de la solution obtenue, la cristallisation de ladite polyamine dans la résine époxy sous forme de particules de taille inférieure à 100 microns.

8. Procédé selon la revendication 7, dans lequel les particules de polyamine obtenues ont une taille inférieure à 60 microns.

9. Procédé selon la revendication 7 ou 8 dans lequel la proportion de la polyamine aromatique primaire est de 20 à 50 parties en poids pour 100 parties de résine époxy.

10. Procédé selon l'une des revendications 7 à 9 dans lequel la viscosité dynamique de la résine époxy employée est ajustée à une valeur de 0,04 à 50 Pa.s à 25°C, éventuellement par l'ajout d'un solvant ou de diluants réactifs.

11. Procédé selon l'une des revendications 7 à 10 dans lequel la résine époxy est choisie dans le groupe formé par la résine diglycidyléther du bis-phénol-A ou du bis-phénol-F, la résine de bis-phénol formol, la résine phénol-novolaque, les résines cycloaliphatiques, les résines tri- ou tétrafonctionnelles ou les mélanges d'au moins deux de ces résines.

12. Utilisation d'une composition selon l'une des revendications 1 à 6 ou fabriquée par un procédé selon l'une des revendications 7 à 11 pour l'imprégnation d'une structure de mèches tressées.

13. Utilisation selon la revendication 12 dans laquelle ladite structure imprégnée est introduite dans un puits foré dans le sol, la réaction de polymérisation de ladite composition conduisant à son durcissement au sein du puits.

14. Utilisation selon la revendication 12 ou 13 dans laquelle ladite structure a une forme tubulaire.

## Patentansprüche

1. Reaktive Zusammensetzung mit verbesserter Latenzzeit, die wenigstens ein primäres aromatisches Polyamin enthält, das in der durch 4,4'-Methylen-bis-(2,6-Diethylanilin) und 4,4'-Methylen-bis-(2,6-Dimethylanilin) gebildeten Gruppe gewählt ist, wobei das Polyamin in Form von kristallisierten Partikeln von weniger als 100 Mikrometer Größe in Suspension in einem Epoxyidharz vorliegt und diese Zusammensetzung **dadurch gekennzeichnet, dass** sie durch Zusatz wenigstens eines primären aromatischen Polyamins in flüssiger Form in das bei einer Temperatur von 40 bis 60°C gehaltene Epoxyidharz derart erhalten wird, dass durch Abkühlung der erhaltenen Lösung die Kristallisation des Polyamins in dem Epoxyidharz in Form von kristallisierten Partikeln von weniger als 100 Mikrometer Größe ermöglicht wird.

2. Zusammensetzung nach Anspruch 1, in der die Größe der kristallisierten Polyaminpartikel kleiner als 60 Mikrometer ist.

3. Zusammensetzung nach Anspruch 1 oder 2, in der das Verhältnis des primären aromatischen Polyamins von 20 bis 50 Gewichtsteile für 100 Teile Epoxidharz ist.

4. Zusammensetzung nach einem der Ansprüche 1 bis 3, in der die dynamische Viskosität des verwendeten Epoxidharzes auf einen Wert von 0,04 bis 50 Pa.s bei 25°C, gegebenenfalls durch Zugabe eines Lösungsmittels oder von reaktiven Verdünnungmitteln eingstellt wird.

5. Zusammensetzung nach einem der Ansprüche 1 bis 4, in der das Epoxidharz in der durch Diglycidyletherharz von bis-Phenol-A oder von bis-Phenol-F, Formol-bis-Phenolharz, Phenol-Novolackharz, cycloaliphatische Harze, tri- oder tetrafunktionelle Harze oder die Mischungen von wenigstens zweien dieser Harze gebildeten Gruppe gewählt ist.

6. Zusammensetzung nach einem der Ansprüche 1 bis 5, die eine Gelzeit von wenigstens 12 Stunden bei 80°C hat.

7. Herstellungsverfahren einer reaktiven Zusammensetzung mit verbeserter Latenzzeit nach einem der Ansprüche 1 bis 6, **dadurch gekennzeichnet, dass** es den Zusatz wenigstens eines wie in den Ansprüchen 1 und 2 bestimmten aromatischen Polyamins in flüssiger Form in ein Epoxyidharz umfasst, das bei einer Temperatur von 40 bis 60°C derart gehalten wird, dass durch Abkühlung der erhaltenen Lösung die Kristallisation des Polyamins in dem Epoxyidharz in Form von kristallisierten Partikeln von weniger als 100 Mikrometer Größe ermöglicht wird.

8. Verfahren nach Anspruch 7, in dem die Größe der kristallisierten Polyaminpatiel kleiner als 60 Mikrometer ist.

9. Verfahren nach Anspruch 7 oder 8, in dem das Verhältnis des primären aromatischen Polyamins von 20 bis 50 Gewichtsteile für 100 Teile Epoxidharz ist.

10. Verfahren nach einem der Ansprüche 7 bis 9, in dem die dynamische Viskosität des verwendeten Epoxidharzes auf einen Wert von 0,04 bis 50 Pa.s bei 25°C, gegebenenfalls durch Zugabe eines Lösungsmittels oder von reaktiven Verdünnungmitteln eingstellt wird.

11. Verfahren nach einem der Ansprüche 7 bis 10, in dem das Epoxidharz in der durch Diglycidyletherharz von bis-Phenol-A oder von bis-Phenol-F, Formol-bis-Phenolharz, Phenol-Novolackharz, cycloaliphatische Harze, tri- oder tetrafunktionelle Harze oder die Mischungen von wenigstens zweien dieser Harze gebildeten Gruppe gewählt ist.

12. Verwendung einer Zusammensetzung nach einem der Ansprüche 1 bis 6 oder hergestellt nach einem der Ansprüche 7 bis 11 zur Imprägnierung einer geflochtenen Maschenstruktur.

13. Verwendung nach Anspruch 12, in der diese imprägnierte Struktur in ein Bohrloch im Boden eingeführt wird, wobei die Polymeristationsreaktion der Zusammensetzung zum Erhärten in dem Loch führt.

14. Verwendung nach Anspruch 12 oder 13, in der diese Struktur eine Röhrenform hat.

## Claims

1. A reactive composition with improved latency, containing at least one primary aromatic polyamine selected from the group formed by 4,4'-methylene-bis-(2,6-diethylaniline) and 4,4'-methylene-bis-(2,6-dimethyl-aniline), said polyamine being in the form of crystallised particles having a size of less than 100 microns, in suspension in an epoxy resin, said composition being **characterized in that** it is obtained by adding at least one primary aromatic polyamine in liquid form to the epoxy resin maintained at a temperature of 40-60°C, in such a manner as to allow, by cooling the solution obtained, said polyamine to crystallise in the epoxy resin in the form of particles having a size of less than 100 microns.

2. A composition according to claim 1, in which the size of the crystallised particles is less than 60 microns.

3. A composition according to claim 1 or 2, in which the proportion of primary aromatic polyamine is 20 to 50 parts by weight per 100 parts of epoxy resin.

4. A composition according to any one of claims 1 to 3, in which the dynamic viscosity of the epoxy resin used is adjusted to a value of 0.04 to 50 Pa.s at about 25°C, optionally by addition of a solvent or reactive diluents.

5. A composition according to any one of claims 1 to 4, in which the epoxy resin is selected from the group formed by bis-phenol-A or bis-phenol-F diglycidylether ether resin, bis-phenol formol resin, phenol-novolac resin, cycloaliphatic resins, tri- or tetra-functional resins or mixtures of at least two of these resins.

6. A composition according to any one of claims 1 to 5 having a gel time at 80°C of at least 12 hours.

7. A process for manufacturing a reactive composition with improved latency according to any one of claims 1 to 6, **characterized in that** it comprises adding at least an aromatic polyamine as defined in claim 1 or 2, in the liquid form, to a resin maintained at a temperature of 40-60°C, in such a manner as to allow, by cooling the solution obtained, said polyamine to crystallise in the epoxy resin in the form of particles having a size of less than 100 microns.

8. A process according to claim 7, in which the particles of polyamine obtained have a size of less than 60 microns.

9. A process according to claim 7 or 8, in which the proportion of primary aromatic polyamine is 20 to 50 parts by weight per 100 parts of epoxy resin.

10. A process according to any one of claims 7 to 9, in which the dynamic viscosity of the epoxy resin used is adjusted to a value of 0.04 to 50 Pa.s at about 25°C, optionally by addition of a solvent or reactive diluents.

11. A process according to any one of claims 7 to 10, in which the epoxy resin is selected from the group formed by bis-phenol-A or bis-phenol-F diglycidylether ether resin, bis-phenol formol resin, phenol-novolac resin, cycloaliphatic resins, tri- or tetra-functional resins or mixtures of at least two of these resins.

12. Use of a composition according to any one of claims 1 to 6 or manufactured by a process according to any one of claims 7 to 11 for impregnation of a structure of braided strands.

13. Use according to claim 12, in which said impregnated structure is introduced into a well bored in the ground and the polymerisation reaction of said composition leads to its hardening in the well.

14. Use according to claim 12 or 13, in which said structure is tubular in form.
